# EUROPÄISCHE PATENTSCHRIFT

(11) **EP 3 547 264 B1**
(45) Veröffentlichungstag und Bekanntmachung des Hinweises auf die Patenterteilung: **19.07.2023**
(21) Anmeldenummer: 18164210.9
(22) Anmeldetag: 27.03.2018
(51) Int. Cl.: G06T 17/00, A41H 3/00, G06T 19/00

(54) **VERFAHREN ZUR ERZEUGUNG EINER STRICKTECHNISCH HERSTELLBAREN ABWICKLUNG EINER OBERFLÄCHE EINES DREIDIMENSIONALEN KÖRPERS**
METHOD FOR FLATTENING OF A SURFACE OF A THREE-DIMENSIONAL BODY FOR KNITTING
PROCESSUS DE PRODUCTION D'UN DÉROULEMENT POUVANT ÊTRE FABRIQUÉ PAR TISSAGE D'UNE SURFACE D'UN CORPS TRIDIMENSIONNEL

(43) Veröffentlichungstag der Anmeldung: 02.10.2019
(73) Patentinhaber: KM.ON GmbH, 60386 Frankfurt am Main (DE)
(72) Erfinder: DIETRICH, Franz, 14467 Potsdam (DE)
(74) Vertreter: Kohler Schmid Möbus Patentanwälte

(56) Entgegenhaltungen:
- EP-A1- 2 322 047
- EP-A1- 3 156 922
- WO-A1-2016/169494
- WO-A2-02/057964
- US-A1- 2009 222 127
- MCCARTNEY J ET AL: "Pattern flattening for orthotropic materials", COMPUTER AIDED DESIGN, ELSEVIER PUBLISHERS BV., BARKING, GB, Bd. 37, Nr. 6, 1. Mai 2005 (2005-05-01), Seiten 631-644, XP027649810, ISSN: 0010-4485 [gefunden am 2005-05-01]
- WANG J ET AL: "Interactive 3D garment design with constrained contour curves and style curves", COMPUTER AIDED DESIGN, ELSEVIER PUBLISHERS BV., BARKING, GB, Bd. 41, Nr. 9, 1. September 2009 (2009-09-01), Seiten 614-625, XP026495042, ISSN: 0010-4485, DOI: 10.1016/J.CAD.2009.04.009 [gefunden am 2009-05-03]
- YUKSEL: "Stitch meshes for modeling knitted clothing with yarn-level detail", ACM TRANSACTIONS ON GRAPHICS, Bd. 31, Nr. 4, 1. Januar 2012 (2012-01-01) , Seite 37, XP055059269, ISSN: 0730-0301, DOI: 10.1145/2185520.2185533

## Beschreibung

Die Erfindung betrifft ein Verfahren zur Erzeugung einer stricktechnisch herstellbaren Abwicklung einer Oberfläche eines dreidimensionalen Körpers gemäß dem Oberbegriff von Anspruch 1.

Beim Entwurf und bei der Herstellung von Kleidungsstücken, wie Pullovern, Jacken, Hosen, Schuhen, etc. werden zunehmend Entwurfsprogramme verwendet, welche das Zeichnen von Hand ersetzen sollen. Solche Programme vereinfachen den Designprozess und erlauben kürzere Zeiträume zur Erstellung der Entwürfe.

Ein weiterer Vorteil ist die Möglichkeit der dreidimensionalen Darstellung eines fertigen Entwurfs auf einem Bildschirm. Der Entwurf kann zum Beispiel auf die Konturen eines menschlichen Körpers gelegt werden. Dabei kann schnell erkannt werden, wie die entworfenen Kleidungsstücke z. B. auf dem menschlichen Körper aussehen. Bei Gestrickstücken können Maschenverzüge, Garnmaterial und Garnfarbe realistisch dargestellt werden.

Für die Herstellung der entworfenen Kleidungsstücke ist es oft notwendig, eine Abwicklung des dreidimensionalen Entwurfs herzustellen, da die Kleidungsstücke normalerweise aus mehreren Einzelteilen zusammengesetzt sind. Die Einzelteile werden separat hergestellt und anschließend durch Nähen, Ketteln, etc. zusammengefügt.

Um solche Abwicklungen zu schaffen, wurden Programme und Verfahren entwickelt, welche eine Abwicklung eines dreidimensionalen Körpers in mehrere zweidimensionale Segmente erstellen können. Es handelt sich hierbei allerdings lediglich um eine zweidimensionale Projektion, deren Ergebnis nicht nachvollziehbar ist. Für stricktechnisch herzustellende Kleidungsstücke sind solche Verfahren nicht einsetzbar, da die Abwicklung der Kleidungsstücke ein hohes Maß an Nachvollziehbarkeit benötigt. Für die Abwicklung gesetzte Schnitte müssen das Abwicklungsverhalten einer abzuwickelnden Geometrie nachvollziehbar beeinflussen. Die Lage der benötigten Spickel, d. h. der geschnittenen Abwicklung einer Oberfläche einer dreidimensionalen Form, muss kontrolliert gesetzt werden können. Die Ausprägung der Spickel muss nachvollziehbar entstehen. Weiterhin muss die Abwicklung stricktechnisch herstellbar sein.

Aus der DE 10 2012 101 428 A1 ist ein Verfahren zur Erstellung eines Bekleidungsschnitts bekannt. Das Verfahren umfasst das Erstellen einer virtuellen dreidimensionalen Abbildung der Körperhälften mindestens eines Abschnittes eines Körpers einer Person, das Erzeugen von virtuellen Koordinaten zur Simulation eines Kleidungsstücks und das Zuordnen von relativen Maßen des simulierten Kleidungsstücks zu einer zweidimensionalen Darstellung. Es wird eine virtuelle dreidimensionale Abbildung einer realen Person erstellt. Das Vorliegen einer Symmetrie der Körperhälften bezüglich einer Symmetrieachse wird geprüft. Ein an die Abbildung angepasstes Element wird abgewickelt und das Element in dem Bekleidungsschnitt gezielt verändert.

Aus der DE 10 2016 209 675 A1 ist ein Verfahren zum Herstellen eines Kleidungsstücks bekannt. Basierend auf Körperdaten und Musterdaten werden Herstellungsdaten erzeugt, welche dazu geeignet sind, von einer Herstellungsmaschine verarbeitet zu werden.

Beide vorgenannten Verfahren benötigen die Körperdaten einer Person.

McCartney J et al: "Pattern flattening for orthotropic materials", Computer Aided Design, Elsevier Publishers BV., Barking, GB, Bd. 37, Nr. 6, 1. Mai 2005, S. 631 - 644, offenbart ein Verfahren zum Abflachen von dreidimensionalen Darstellungen. Die Darstellungen werden mittels einer Vielzahl von Polygonen auf einen bereits vorhandenen, dreidimensionalen Körper gelegt. Werden Schnitte in der Darstellung gesetzt, müssen die Polygone in diesem Bereich neu berechnet werden.

Die US-A-2009222127 beschreibt eine Musterungsanlage zum Entwurf von Kleidungsstücken. Ein Benutzer wird geleitet, Daten einzugeben, die charakteristisch für einen vorgesehenen Träger des Kleiderstücks sind. Ein Prozessor generiert Strickanweisungen, Hinweise auf unterschiedliche Grade von Druck, die durch ein Kleidungsstück auf ein grafisches Modell ausgeübt werden, und Ausdrucke von Musterdarstellungen.

Die EP 2 322 047 A1 offenbart ein Abnäherentwurfsverfahren für das Entwerfen eines Kleidungsstücks durch dreidimensionales Simulieren eines getragenen Zustands des Kleidungsstücks an einem Menschenkörpermodell und durch Anzeigen eines durch die Simulation erhaltenen Bilds auf einem Farbmonitor.

Aufgabe der vorliegenden Erfindung ist es, ein Verfahren zur Erzeugung einer stricktechnisch herstellbaren Abwicklung einer Oberfläche eines dreidimensionalen Körpers bereitzustellen, sodass die Segmente, aus denen der dreidimensionale Körper hergestellt werden kann, stricktechnisch einfach herstellbar sind.

Gelöst wird diese Aufgabe erfindungsgemäß durch ein computerimplementiertes Verfahren zur Erzeugung einer stricktechnisch herstellbaren Abwicklung einer Oberfläche eines dreidimensionalen Körpers, mit den Merkmalen des Patentanspruchs 1.

Um einen dreidimensionalen Körper stricktechnisch herzustellen, ist es bekannt, zunächst ein Papiermodell des dreidimensionalen Körpers zu erstellen und diesen durch eine endliche Anzahl von Schnitten in Segmente oder so genannte Spickel aufzuteilen. Insbesondere werden dabei in Bereichen hoher Krümmung Schnitte gesetzt. Die Schnitte führen zu einer Entspannung des Materials. Wird die geschnittene Form flachgedrückt, legt sich das Material abhängig von den verbleibenden Spannungen in die Ebene. Das Problem bei der Verwendung eines Papiermodells war, dass bei einem falsch oder fehlerhaft gesetzten Schnitt das Modell wieder zusammengeklebt und erneut geschnitten werden musste.

Die Vorteile des erfindungsgemäßen Verfahrens liegen darin, dass Schnitte (virtuell) in die Oberfläche des dreidimensionalen Körpers gelegt werden können und anschließend überprüft werden kann, zu welchen Spickeln diese Schnitte führen. Die Spickel oder Abwicklungen werden hinsichtlich ihrer Qualität überprüft. Erst wenn ein oder mehrere vorgegebene Kriterien erfüllt sind, wird dann dazu übergegangen, diese Spickel stricktechnisch herzustellen. Die erfindungsgemäße Vorgehensweise ist in hohem Maße nachvollziehbar. Bei der Abwicklung von mehrfach gekrümmten Flächen lässt sich immer nur näherungsweise eine planare und krümmungsfreie Fläche erreichen. Idealerweise werden die Schnitte in der Oberfläche des dreidimensionalen Körpers so gesetzt, dass möglichst plane Flächenabschnitte (Abwicklungen) entstehen. Tatsächlich weisen die Flächenabschnitte noch gewisse Wölbungen auf. Somit kann nachvollzogen werden, zu welchem Ergebnis ein bestimmter Schnitt führt und können entsprechend die Schnittsetzungen korrigiert werden, um die verbleibenden Wölbungen möglichst zu reduzieren. Das Setzen von Schnitten kann manuell, z. B. mittels einer Eingabeeinrichtung eines CAD-Systems, oder automatisiert, z. B. in einem CAD-System, erfolgen.

Je nach Form des dreidimensionalen Körpers kann es ausreichend sein, einen oder mehrere Schnitte in die Oberfläche zu legen, also nur einzuschneiden, und eine einzige Abwicklung zu erzeugen, die stricktechnisch herstellbar ist. Es kann auch notwendig sein, Schnitte so zu legen, dass Abschnitte der Oberfläche abgetrennt und abgewickelt werden. Die einzelnen Abschnitte der Segmente müssen nach ihrer stricktechnischen Herstellung zu dem dreidimensionalen Körper zusammengesetzt und verbunden werden.

Ausgehend von der zumindest einen Abwicklung kann ein Strickprogramm für eine Strickmaschine erzeugt werden. Damit eine Abwicklung möglichst einfach stricktechnisch herstellbar ist, kann diese geeignet verschoben und/oder gedreht werden, sodass sie an der richtigen Position einer Strickmaschine in der richtigen Orientierung gestrickt werden kann.

Das Setzen des zumindest einen Schnitts kann unter Berücksichtigung von stricktechnischen Bedingungen, insbesondere einer Strickrichtung, in der die eingeschnittene oder ausgeschnittene Oberfläche gestrickt werden soll, und/oder unter Berücksichtigung einer Designvorgabe erfolgen. Beispielsweise kann ein Designer eine Naht an einer bestimmten Stelle eines Kleidungsstücks vorgeben. Somit wird sinnvollerweise an dieser Stelle ein Schnitt gesetzt. Die Schnitte beeinflussen die Maschenverläufe und somit auch Muster und farbliche Gestaltung des herzustellenden Gestrickstücks. Vorzugsweise wird vor dem ersten Schnitt eine Strickrichtung festgelegt. Die Strickrichtung kann abhängig vom Design des herzustellenden Gestrickstücks, z. B. Kleidungsstück, und von stricktechnischen Anforderungen festgelegt werden. Durch die Strickrichtung kann die Richtung der Schnitte bestimmt werden. Darüber hinaus können entlang des Schnitts Fixpunkte gelegt werden. Sie bilden eine Orientierung für das spätere Layout des Schnittmusters im Strickprogramm für die Strickmaschine. Durch die Fixpunkte lassen sich auch die einzelnen Segmente zueinander zuordnen.

Die zumindest eine Abwicklung kann auf der Anzeigeeinrichtung dargestellt werden. Insbesondere können der Grad der Formverzerrung, also Abweichungen des Flächeninhalts der Abwicklung im Vergleich zur zugeordneten Oberfläche des dreidimensionalen Körpers und/oder die Stärke der Krümmung, beispielsweise in Form von Farbschemata oder prozentuellen Angaben, grafisch dargestellt werden. Insbesondere kann so beurteilt werden, ob das Ergebnis der Abwicklung unter Berücksichtigung von Materialspannung, Maschenverhältnis und konstruktiven Gegebenheiten eine strickbare Abwicklung darstellt.

Der Abwicklungsprozess kann auf der Anzeigeeinrichtung dargestellt werden und interaktiv beeinflussbar sein. Insbesondere kann der Abwicklungsprozess als beeinflussbare Echtzeitsimulation verlaufen. Der Abwicklungsprozess kann beispielsweise mit Hilfe einer "virtuellen Hand" beeinflusst werden. Segmente der Oberfläche oder die gesamte eingeschnittene Oberfläche lassen sich realitätsnah auf der Anzeigeeinrichtung bewegen (ziehen, drücken, drehen). Wie in der Realität auch, kommt es durchaus zu übereinanderliegenden Teilen einer oder mehrerer Geometrien. Mit Hilfe der virtuellen Hand können diese in ihrer Position verändert werden.

Als Kriterium für die Qualität der Abwicklung wird ein Verhältnis oder eine Abweichung des Flächeninhalts der eingeschnittenen Oberfläche oder des Ausschnitts der Oberfläche zum Flächeninhalt der zugeordneten Abwicklung und/oder eine Krümmung der Abwicklung verwendet. Es kann beispielsweise vorgegeben werden, dass die Abwicklung nur noch eine vorgegebene maximale Krümmung aufweisen darf. Nur wenn die Krümmung unter diesem Wert liegt, liegt eine hinreichend plane Abwicklung vor, die stricktechnisch hergestellt werden kann. Würden die Kriterien nicht eingehalten, so würden Spickel produziert, die anschließend, nachdem sie zusammengesetzt sind, nicht den ursprünglichen dreidimensionalen Körper ergeben.

Die zumindest eine Abwicklung wird mittels eines Schwerkraftmodells erzeugt. Die eingeschnittene Oberfläche oder Abschnitte der Oberfläche des dreidimensionalen Körpers werden somit mittels simulierter Schwerkraft auf eine horizontale Ebene gedrückt. Somit kann bewertet werden, ob die eingeschnittene Oberfläche oder ein Abschnitt der dreidimensionalen Oberfläche so abgewickelt werden kann, dass eine möglichst plane Abwicklung entsteht, die stricktechnisch hergestellt werden kann. Dabei kann vorgesehen sein, dass die Schwerkraft eingestellt wird. Durch Einstellung der Schwerkraft können unterschiedliche Materialeigenschaften des herzustellenden Gestrickstücks berücksichtigt werden. Insbesondere können so unterschiedliche Materialien, Garne, Muster etc. eines Gestrickstücks berücksichtigt werden.

Die Oberfläche des dreidimensionalen Körpers kann als Punktwolke, Nurbsfläche oder Polygonnetz dargestellt werden. Eine Punktwolke kann dabei ein "Punkthaufen" sein, also eine Menge von Punkten eines Vektorraums, die eine unorganisierte räumliche Struktur aufweist. Polygonnetze repräsentieren Geometrien durch Auflösungen in eine Vielzahl mehreckiger Flächen. Polygone haben in den meisten Fällen aufgrund der besseren Berechenbarkeit drei oder vier Seiten. Diese Seiten teilen sie innerhalb des Netzes mit anschließenden Polygonen. Die einzelnen Seiten der Polygone bestehen aus nicht oder einfach gekrümmten Linien. Polygonnetze können aus Punktwolken generiert werden.

Ein Flächenaufbau eines Oberflächenmodells mit Nurbskurven (auch *splines* genannt), erfolgt über eine Vielzahl von Einzelflächen. Idealerweise hat jede Fläche vier begrenzende Kurven. Diese werden mit Hilfe von Stetigkeiten zueinander in Bezug gesetzt, um bei Bedarf krümmungsstetige Flächenverläufe zu erzeugen. Nurbsflächen sind besonders geeignet, um im Computergrafikbereich, beispielsweise im CAD, zur Modellierung beliebiger Formen verwendet zu werden.

Ein Maschenraster kann der Abwicklung überlagert dargestellt werden, insbesondere auf der Anzeigeeinrichtung. Insbesondere kann ein Maschenraster auf die Abwicklung projiziert werden. Somit kann überprüft werden, ob eine vorgesehene Maschenanordnung vorhanden ist.

Weiterhin kann vorgesehen sein, dass eine Designapplikation, insbesondere eine Farbe oder ein Muster, auf der Oberfläche des dreidimensionalen Körpers dargestellt wird und bei der Erzeugung der Abwicklung mit abgewickelt wird. Somit kann simuliert werden, wie die Designapplikation in der Abwicklung und somit im herzustellenden Spickel aussieht.

Weiterhin ist es denkbar, dass eine Designapplikation auf die zumindest eine Abwicklung, insbesondere ein abgewickeltes Maschenraster, aufgebracht und anschließend auf dem dreidimensionalen Körper dargestellt wird. Somit kann das Design der Abwicklung verändert werden und anschließend überprüft werden, zu welchem Ergebnis die Veränderung beim dreidimensionalen Körper führt.

Gemäß einer Verfahrensvariante kann vorgesehen sein, dass auf der Oberfläche des dreidimensionalen Körpers gezeichnet wird. Somit kann eine Designapplikation auf der Oberfläche des dreidimensionalen Körpers aufgebracht werden. Anschließend können durch Setzen von Schnitten eine oder mehrere Abwicklungen erzeugt werden und es kann festgestellt werden, zu welchem Resultat die Zeichnung auf dem dreidimensionalen Körper bei der Abwicklung führt.

Gemäß einer Verfahrensvariante kann vorgesehen sein, dass aus der zumindest einen Abwicklung eine Oberfläche eines dreidimensionalen Körpers erzeugt wird. Dabei kann beispielsweise ein auf der Abwicklung erzeugtes Design mitübertragen werden und überprüft werden, wie dieses Design auf der Oberfläche des dreidimensionalen Körpers aussieht.

Um Kleidungsstücke unterschiedlicher Größen herstellen zu können, kann es vorteilhaft sein, eine Abwicklung zu gradieren. Nach der Gradierung können die Abwicklungen wiederum in eine Oberfläche eines dreidimensionalen Körpers überführt werden. Somit kann überprüft werden, wie ein gradiertes Kleidungsstück aussieht.

In den Rahmen der Erfindung fällt außerdem ein computerimplementiertes Verfahren, welches die Schritte des erfindungsgemäßen Verfahrens umfasst.

Weiterhin fällt in den Rahmen der Erfindung ein System zur Datenverarbeitung, umfassend Mittel zur Ausführung der Schritte des erfindungsgemäßen Verfahrens.

Zudem fällt in den Rahmen der Erfindung ein Computerprogrammprodukt, umfassend Befehle, die bei der Ausführung des Programms durch einen Computer durch diesen veranlassen, das erfindungsgemäße Verfahren auszuführen.

Weitere Merkmale und Vorteile der Erfindung ergeben sich aus der nachfolgenden Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und in der nachfolgenden Beschreibung näher erläutert.

Es zeigen:
- Fig. 1: einen dreidimensionalen Körper;
- Fig. 2: den dreidimensionalen Körper, in den Schnitte gelegt wurden;
- Fig. 3: eine weitere Darstellung des Körpers mit Schnitten;
- Fig. 4a - 4e: den Ablauf eines Abwicklungsprozesses;
- Fig. 5a: die Darstellung eines Objekts mit Schnitten;
- Fig. 5b: die Abwicklung der Oberfläche des Körpers der Fig. 5a;
- Fig. 6a: die Darstellung der Fig. 5b mit eingetragenen Eckpunkten;
- Fig. 6b: eine farblich veränderte Darstellung gemäß der Fig. 6a;
- Fig. 6c: eine Überlagerung der Abwicklungen über ein Maschenraster.

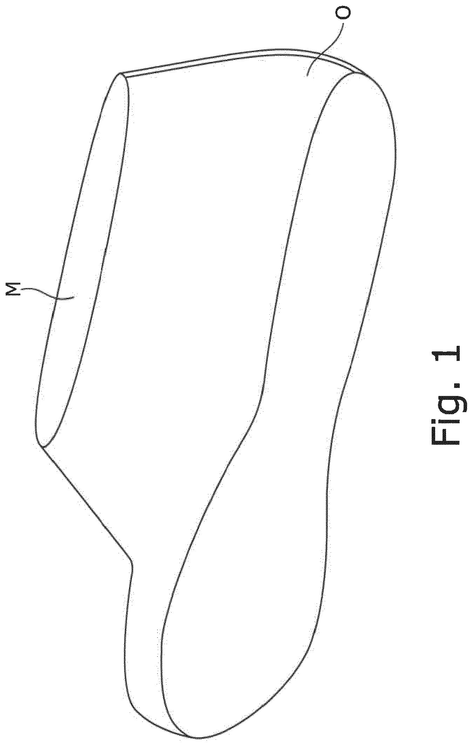

Die Fig. 1 zeigt einen dreidimensionalen Körper M in Form eines Schuhs bzw. einer Socke mit einer Oberfläche O. Um einen Schuh oder eine Socke gemäß diesem Modell stricktechnisch herzustellen, ist es erforderlich, die Oberfläche O einzuschneiden oder in unterschiedliche Segmente, auch Abschnitte der Spickel genannt, aufzuteilen, die stricktechnisch herstellbar sind. Der Körper M bzw. die Oberfläche O des Körpers M kann mittels eines CAD-Programms erstellt werden. Beispielsweise kann die Oberfläche O als Punktwolke, Nurbsfläche oder Polygonnetz auf einer Anzeigeeinrichtung dargestellt werden.

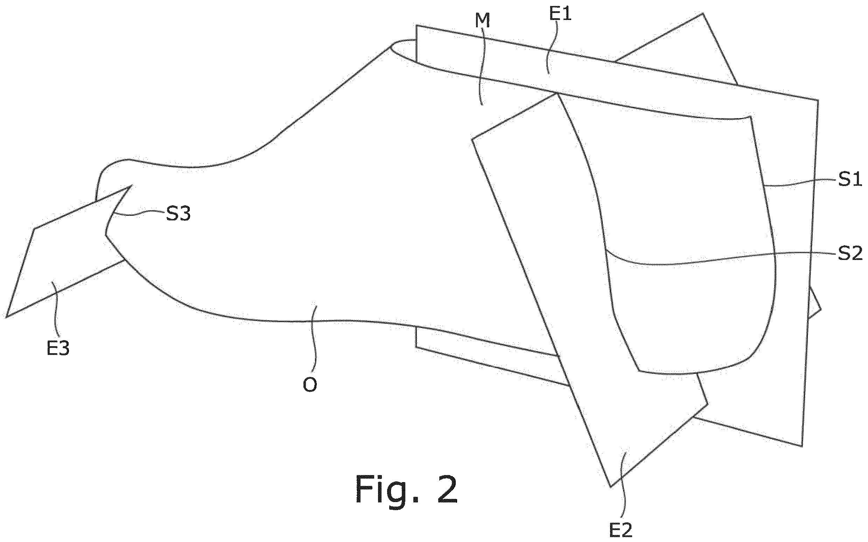

Die Fig. 2 zeigt den Körper M mit der Oberfläche O der Fig. 1. In die Oberfläche O wurden Schnitte S1 - S3 als Kurven gelegt. Anschließend wurde die Oberfläche mit Ebenen E1 - E3, die jeweils einen der Schnitte S1 - S3 (Kurven) aufweisen, geschnitten. Insbesondere wurden die Schnitte S1 - S3 entlang einer UV-Normalenrichtung (die UV-Normalenrichtung ist analog zur Z-Achse eines kartesischen Koordinatensystems die Normale eines gekrümmten Raums einer Fläche) als Flächen E1 - E3 extrudiert. Die extrudierten Flächen E1 - E3 bilden Schnittmengen mit der Oberfläche O des Körpers M. Anstatt extrudierter Flächen könnten auch andere Methoden verwendet werden, um die Oberfläche O zu schneiden.

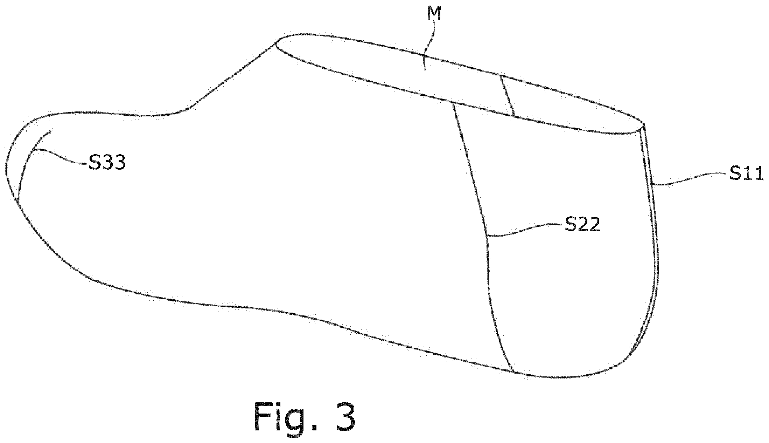

Die Fig. 3 zeigt den Körper M mit den Schnittmengen S11, S22, S33. Die Schnittmengen S11, S22, S33 sind parametrisch über die Schnitte S1 - S3 veränderbar.

Nurbs- und auch Polygonflächen lassen sich ohne Qualitätsverlust nur mit Flächengeometrien trimmen. Dies liegt an den zugrundeliegenden Algorithmen. Bei der Nutzung von Kurven zum Trimmen entstehen oft bruchstückhafte Trimmkanten. Dies resultiert aus der nicht exakt beschreibbaren Näherung einer Kurve im Raum an eine Fläche. Sie müsste die Fläche in jedem Punkt berühren. Dies ist nur bei Projektionen möglich. Projektionen verändern aber den Verlauf und die Bearbeitbarkeit einer Kurve, denn sie übertragen eine gesamte Kurve auf ein Areal von Polygonen. Ein Kurvenabschnitt kann immer nur auf eine Polygonfläche projiziert werden. Das bedeutet, die Kurve wird zerstückelt.

Eine Fläche trifft die zu schneidende Geometrie in allen Punkten. Es gibt sozusagen Intersektionen (Berührungen), also Schnittmengen.

Parametrisch bedeutet, dass sich bei jeder Veränderung der Kurve (eines Schnitts S1 - S3) auch die Fläche E1 - E3 und damit die Intersektion (Schnitt), also S11, S22, S33, verändert. Es hängen sozusagen mehrere Parameter in einer Kette von Bedingungen aneinander.

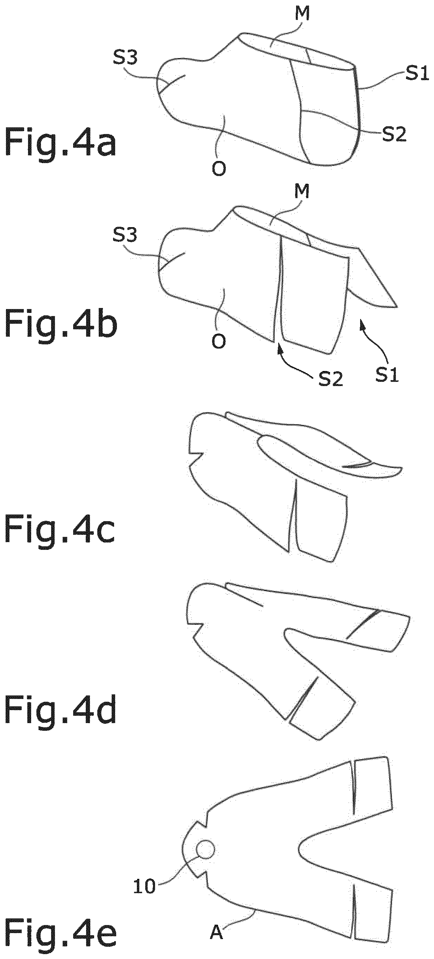

Die Fig. 4a - 4e zeigen den Ablaufprozess einer Abwicklung der Oberfläche O des Körpers M in einer Echtzeitsimulation. Die Echtzeitsimulation erfolgt interaktiv. Dies bedeutet, dass die Simulation jederzeit angehalten werden kann. Dadurch lassen sich zu jedem Zeitpunkt "Störfaktoren" für eine unzureichende Abwicklung genau analysieren. Während des Abwicklungsprozesses kann der Modellzustand, d. h. der Zustand der Abwicklung als Flächenmodell extrahiert werden. Die in den Fig. 4a - 4e gezeigten Darstellungen sind als CAD-Daten vorhanden. Die Abwicklung erfolgt in einem Schwerkraftmodell. Dies bedeutet, dass eine Schwerkraft simuliert wird, die die Oberfläche O nach unten in eine plane Position zieht. Die Schwerkraft kann beeinflusst, insbesondere eingestellt, werden.

In der Fig. 4a ist der Körper M noch in dem Zustand gemäß der Fig. 1 - 3 dargestellt. Es sind lediglich die Schnitte S1 - S3 gelegt. Wenn nun eine Schwerkraft nach unten zieht, so nimmt die Oberfläche O eine flachere Gestalt an, wie dies in der Fig. 4b zu sehen ist. Es ist zu sehen, dass sich die Oberfläche im Bereich der Schnitte S1, S2 aufweitet.

In der Fig. 4c nimmt die Oberfläche O eine noch flachere Gestalt an. In der Fig. 4d ist sie nahezu vollständig flach. Die Fig. 4e zeigt die Abwicklung der Oberfläche O des Körpers M. Hier Ist zu erkennen, dass beispielsweise an der Stelle 10 eine leichte plastische Auswölbung vorhanden ist. Dies ist ein Hinweis, dass die Abwicklung A nicht vollständig plan ist, sondern dass aufgrund von Materialeigenschaften eine vollständige Planizität nicht erreicht werden konnte. Es kann bewertet werden, ob die Abwicklung A vorgegebene Kriterien erfüllt, insbesondere kann anhand einer Gaußschen Krümmungsanalyse festgestellt werden, ob die Krümmung an der Stelle 10 akzeptabel oder zu groß ist. Wenn sie zu groß ist, müssen die Schnitte S1 - S3 anders gelegt werden, um die Krümmung an der Stelle 10 zu reduzieren.

Alternativ oder zusätzlich kann der Flächeninhalt der Abwicklung A ins Verhältnis des Flächeninhalts der Oberfläche O gesetzt oder mit diesem verglichen werden. Auch hier kann ein Verhältnis oder eine Abweichung vorgegeben werden, welche(s) akzeptabel ist. Wenn das akzeptable Ergebnis nicht erreicht wird, müssen die Schnitte S1 - S3 anders gelegt werden, um zu einem Verhältnis oder einer Abweichung zu gelangen, welche(s) akzeptabel ist.

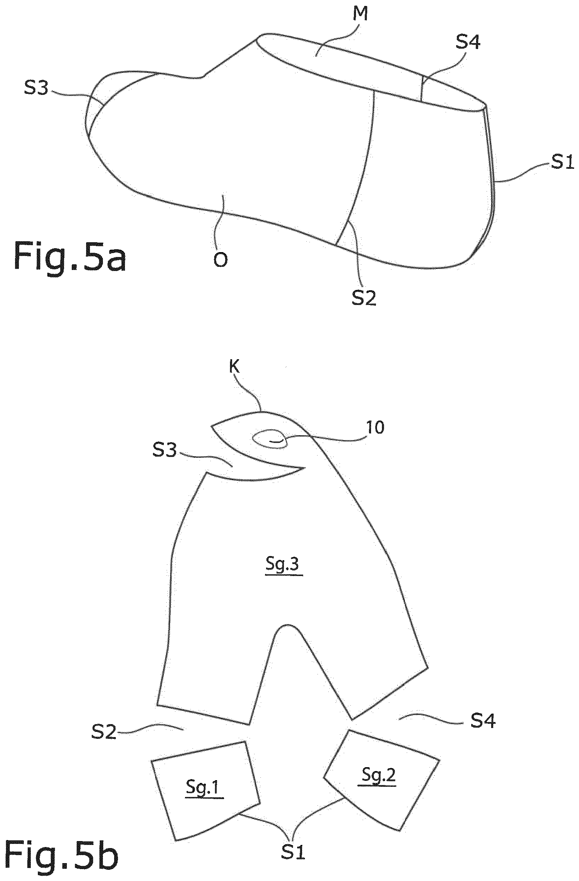

Die Fig. 5a zeigt den Körper M mit der Oberfläche O, wobei die Schnitte S1 - S4 anders gewählt wurden als beispielsweise in der Fig. 2. Bei dieser Wahl der Schnitte entsteht die Abwicklung gemäß der Fig. 5b. Insbesondere entstehen Segmente oder Spickel Sg.1, Sg.2, Sg.3.

Während im vorhergehenden Beispiel die Schnitte die Oberfläche O einstückig gelassen haben, wurde sie nun durch Verlängerung der Schnitte aufgeteilt in die einzelnen Segmente Sg.1, Sg.2, Sg.3. Es ist auch zu erkennen, dass die Verlängerung des Schnitts S3 nicht ausreichend ist, um im Bereich der Stelle 10 eine plane Fläche zu erzielen. Es wurde daher eine stricktechnisch nicht herstellbare Abwicklung geschaffen. Um eine stricktechnisch herstellbare Abwicklung zu erzielen, muss das Segment K vom Segment Sg.3 getrennt werden.

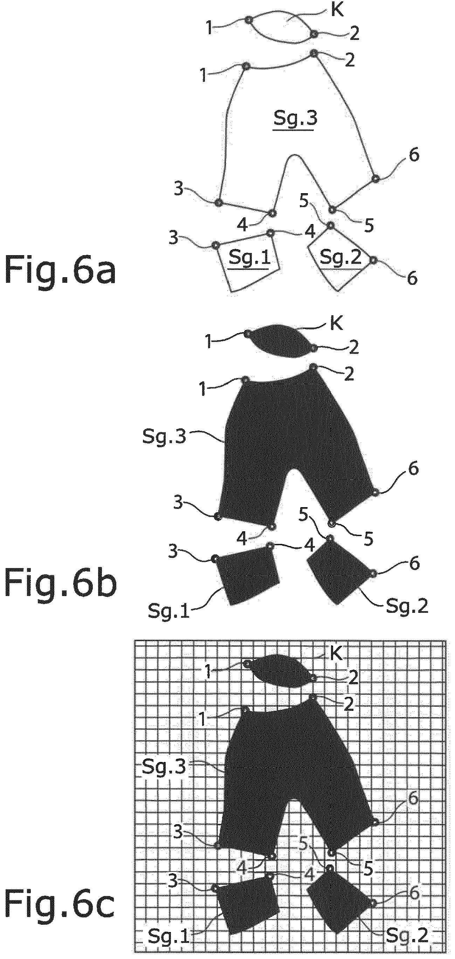

Die Fig. 6a zeigt die Abwicklungen gemäß der Fig. 5b, wobei das Segment K durch Verlängerung des Schnitts S3 abgetrennt wurde. Durch Verlängerung des Schnitts S3 konnte eine bessere Planlzltät des Segments K erreicht werden, sodass auch dieses stricktechnisch herstellbar ist. Die Schnitte S1, S2, S3, S4 führen zu einer Segmentierung der Oberfläche O und somit des Körpers M, jedoch zu stricktechnisch herstellbaren Abwicklungen. Jedes einzelne Segment Sg.1, Sg.2, Sg.3, K ist stricktechnisch herstellbar, da es eine ausreichende Planizität aufweist. Weiterhin sind in Fig. 6a die Eckpunkte 1 - 6 der Segmente Sg.1, Sg.2, Sg.3 und K eingetragen. Die Eckpunkte 1 - 6 stellen auch Fixpunkte dar, insbesondere die Endpunkte der Schnitte S1 - S4. Durch sie wird festgelegt, wie die Segmente S1, S2, S3 und K wieder zusammengesetzt werden müssen, um zu dem Körper M zu gelangen.

Durch Drehung und Anordnung der Segmente Sg.1 - Sg.3 und K in einem Maschenraster wird ein Aufeinanderfallen zueinander gehörender Maschen in den Segmenten ermöglicht. Die einzelnen Segmente Sg.1 - Sg.3 und K können gedreht werden, sodass sie in geeigneter Strickrichtung und Anordnung auf einer Strickmaschine gestrickt werden können.

In der Fig. 6b wurden die Konturen der Segmente Sg.1 - Sg.3 und K mit einer Farbe gefüllt. Die mit Farbe gefüllten Konturen können als pixelbasierte 2D-Darstellung in unterschiedlichen Dateiformaten in einer Bildebene abgebildet und gespeichert werden. Die pixelbasierte 2D-Darstellung kann in einem *Compiler,* beispielsweise einer Musterungsanlage, zur Erstellung eines Strickdatensatzes zur Herstellung des Körpers M auf z. B. einer Flachstrickmaschine genutzt werden. Die Bilddarstellung wird hierbei gemäß der Fig. 6c in das Raster einer Software übersetzt, indem die Darstellung in ein Maschenraster umgerechnet wird.

Sämtliche Darstellungen der Fig. 1 - 6 können auf einer Anzeigeeinrichtung dargestellt werden. Die Schnitte S1 - S4 können mittels einer "virtuellen Schere" eingetragen werden. Insbesondere können die Schnittlinien durch Punkte eines Polygonmodells gelegt werden. Der Abstand der Punkte des Polygonmodells kann dabei starr sein, um beispielsweise die Materialeigenschaft von Papier zu simulieren. Alternativ können die Abstände zwischen den Punkten variabel sein, um beispielsweise ein Material wie Seide zu simulieren.

## Patentansprüche

1. Computerimplementiertes Verfahren zur Erzeugung einer stricktechnisch herstellbaren Abwicklung (1) einer Oberfläche (O) eines dreidimensionalen Körpers (M), mit den Verfahrensschritten:
a. Darstellung der Oberfläche (O) des dreidimensionalen Körpers (M) auf einer Anzeigeeinrichtung;
b. Virtuelles Setzen von zumindest einem Schnitt (S1 - S4) in der Oberfläche (O) des dreidimensionalen Körpers (M);
c. Erzeugen zumindest einer Abwicklung (A) der eingeschnittenen Oberfläche (O) und/oder eines durch das Setzen des zumindest einen Schnitts erhaltenen Ausschnitts der Oberfläche (O);
d. Beurteilen der Qualität der zumindest einen Abwicklung (A) anhand zumindest eines vorgegebenen Kriteriums;
e. Wiederholen der Schritte b. - d. bis das zumindest eine Kriterium erfüllt ist,
**dadurch gekennzeichnet, dass** die zumindest eine Abwicklung (A) mittels eines Schwerkraftmodells erzeugt wird und als Kriterium für die Qualität der Abwicklung (A)
a) ein Verhältnis oder eine Abweichung des Flächeninhalts der eingeschnittenen Oberfläche (O) oder des Ausschnitts der Oberfläche (O) zum Flächeninhalt der zugeordneten Abwicklung (A) und/oder
b) eine von einer planen Ebene abweichende Krümmung der Abwicklung (A) verwendet wird.

2. Verfahren nach Anspruch 1, **dadurch gekennzeichnet, dass** ausgehend von der zumindest einen Abwicklung (A) ein Strickprogramm für eine Strickmaschine erzeugt wird.

3. Verfahren nach einem der vorhergehenden Ansprüche, **dadurch gekennzeichnet, dass** das Setzen des zumindest einen Schnitts (S1 - S4) unter Berücksichtigung von stricktechnischen Bedingungen, insbesondere einer Strickrichtung, in der die eingeschnittene oder ausgeschnittene Oberfläche (O) gestrickt werden soll, und/oder unter Berücksichtigung einer Designvorgabe erfolgt.

4. Verfahren nach einem der vorhergehenden Ansprüche, **dadurch gekennzeichnet, dass** die zumindest eine Abwicklung (A) auf der Anzeigeeinrichtung dargestellt wird.

5. Verfahren nach einem der vorhergehenden Ansprüche, **dadurch gekennzeichnet, dass** der Abwicklungsprozess auf der Anzeigeeinrichtung dargestellt wird und interaktiv beeinflussbar ist.

6. Verfahren nach einem der vorhergehenden Ansprüche, **dadurch gekennzeichnet, dass** die Schwerkraft eingestellt wird.

7. Verfahren nach einem der vorhergehenden Ansprüche, **dadurch gekennzeichnet, dass** die Oberfläche (O) des dreidimensionalen Körpers (M) als Punktwolke, Nurbsfläche oder Polygonnetz dargestellt wird.

8. Verfahren nach einem der vorhergehenden Ansprüche, **dadurch gekennzeichnet, dass** ein Maschenraster der Abwicklung überlagert dargestellt wird.

9. Verfahren nach einem der vorhergehenden Ansprüche, **dadurch gekennzeichnet, dass** eine Designapplikation, insbesondere eine Farbe oder ein Muster, auf der Oberfläche (10) des dreidimensionalen Körpers (M) dargestellt wird und bei der Erzeugung der Abwicklung (A) mit abgewickelt wird.

10. Verfahren nach einem der vorhergehenden Ansprüche, **dadurch gekennzeichnet, dass** auf der Oberfläche (O) des dreidimensionalen Körpers (M) gezeichnet wird.

11. Verfahren nach einem der vorhergehenden Ansprüche, **dadurch gekennzeichnet, dass** aus der zumindest einen Abwicklung (A) eine Oberfläche (O) eines dreidimensionalen Körpers (M) erzeugt wird.

12. Verfahren nach einem der vorhergehenden Ansprüche, **dadurch gekennzeichnet, dass** die Abwicklung (A) gradiert wird.

13. Verfahren nach einem der vorhergehenden Ansprüche, **dadurch gekennzeichnet, dass** Maschenverläufe auf der Oberfläche (O) des dreidimensionalen Körpers (M) dargestellt werden.

## Claims

1. Computer-implemented method for producing a development (1) of a surface (O) of a three-dimensional body (M) that can be manufactured by knitting, comprising the method steps of:
a. showing the surface (O) of the three-dimensional body (M) on a display device;
b. virtually placing at least one cut (S1-S4) in the surface (O) of the three-dimensional body (M);
c. producing at least one development (A) of the cut surface (O) and/or of a cutout of the surface (O) obtained by the placement of the at least one cut;
d. assessing the quality of the at least one development (A) using at least one predetermined criterion;
e. repeating steps b.-d. until the at least one criterion is fulfilled,
**characterized in that** the at least one development (A) is produced by means of a gravity model and, as a criterion for the quality of the development (A),
a) a ratio or a deviation of the surface area of the cut surface (O) or of the cutout of the surface (O) to the surface area of the associated development (A) and/or
b) a curvature of the development (A) that deviates from a plane is used.

2. Method according to claim 1, **characterized in that** a knitting program for a knitting machine is produced starting from the at least one development (A).

3. Method according to either of the preceding claims, **characterized in that** the at least one cut (S1-S4) is placed taking into account knitting conditions, in particular a knitting direction in which the cut or cut-out surface (O) is to be knitted, and/or taking into account a design specification.

4. Method according to any of the preceding claims, **characterized in that** the at least one development (A) is shown on the display device.

5. Method according to any of the preceding claims, **characterized in that** the development process is shown on the display device and can be influenced interactively.

6. Method according to any of the preceding claims, **characterized in that** the gravity is set.

7. Method according to any of the preceding claims, **characterized in that** the surface (O) of the three-dimensional body (M) is shown as a point cloud, NURBS surface or polygon mesh.

8. Method according to any of the preceding claims, **characterized in that** a stitch grid is shown superimposed to the development .

9. Method according to any of the preceding claims, **characterized in that** a design application, in particular a color or a pattern, is shown on the surface (10) of the three-dimensional body (M) and is also developed during the production of the development (A).

10. Method according to any of the preceding claims, **characterized in that** drawing is carried out on the surface (O) of the three-dimensional body (M).

11. Method according to any of the preceding claims, **characterized in that** a surface (O) of a three-dimensional body (M) is produced from the at least one development (A).

12. Method according to any of the preceding claims, **characterized in that** the development (A) is graded.

13. Method according to any of the preceding claims, **characterized in that** stitch courses are shown on the surface (O) of the three-dimensional body (M).

## Revendications

1. Procédé mis en oeuvre par ordinateur pour la production d'un déroulement (1) pouvant être fabriqué par tricotage d'une surface (O) d'un corps tridimensionnel (M), comportant les étapes de procédé de :
a. représentation de la surface (O) du corps tridimensionnel (M) sur un dispositif d'affichage ;
b. mise en place virtuelle d'au moins une coupe (S1 - S4) dans la surface (O) du corps tridimensionnel (M) ;
c. production d'au moins un déroulement (A) de la surface (O) entaillée et/ou d'une découpe de la surface (O) obtenue par la mise en place de l'au moins une coupe ;
d. évaluation de la qualité de l'au moins un déroulement (A) à l'aide d'au moins un critère prédéfini ;
e. répétition des étapes b. à d. jusqu'à ce que l'au moins un critère soit rempli,
**caractérisé en ce que** l'au moins un déroulement (A) est produit au moyen d'un modèle de gravité et, sont utilisés comme critère pour la qualité du déroulement (A),
a) un rapport ou un écart entre l'aire de la surface (O) entaillée ou de la découpe de la surface (O) et l'aire du déroulement (A) associé et/ou
b) une courbure du déroulement (A) différente de celle d'un plan plat.

2. Procédé selon la revendication 1, **caractérisé en ce qu'**un programme de tricotage pour une machine à tricoter est produit à partir de l'au moins un déroulement (A).

3. Procédé selon l'une des revendications précédentes,
**caractérisé en ce que** la mise en place de l'au moins une coupe (S1 - S4) est effectuée en tenant compte de conditions de tricotage, en particulier d'un sens de tricotage dans lequel la surface (O) entaillée ou découpée doit être tricotée, et/ou en tenant compte d'une consigne de design.

4. Procédé selon l'une des revendications précédentes, **caractérisé en ce que** l'au moins un déroulement (A) est représenté sur le dispositif d'affichage.

5. Procédé selon l'une des revendications précédentes,
**caractérisé en ce que** le processus de déroulement est représenté sur le dispositif d'affichage et peut être influencé de manière interactive.

6. Procédé selon l'une des revendications précédentes,
**caractérisé en ce que** la gravité est réglée.

7. Procédé selon l'une des revendications précédentes,
**caractérisé en ce que** la surface (O) du corps tridimensionnel (M) est représentée sous forme de nuage de points, surface NURBS ou maillage polygonal.

8. Procédé selon l'une des revendications précédentes,
**caractérisé en ce qu'**une grille de mailles est représentée en superposition au déroulement.

9. Procédé selon l'une des revendications précédentes,
**caractérisé en ce qu'**une application de design, en particulier une couleur ou un motif, est représentée sur la surface (10) du corps tridimensionnel (M) et est déroulée avec lors de la production du déroulement (A).

10. Procédé selon l'une des revendications précédentes, **caractérisé en ce que** des dessins sont réalisés sur la surface (O) du corps tridimensionnel (M).

11. Procédé selon l'une des revendications précédentes,
**caractérisé en ce qu'**une surface (O) d'un corps tridimensionnel (M) est produite à partir de l'au moins un déroulement (A).

12. Procédé selon l'une des revendications précédentes,
**caractérisé en ce que** le déroulement (A) est gradué.

13. Procédé selon l'une des revendications précédentes,
**caractérisé en ce que** des tracés de mailles sont représentés sur la surface (O) du corps tridimensionnel (M).
